# EUROPÄISCHE PATENTSCHRIFT

(11) **EP 0 946 351 B1**
(45) Veröffentlichungstag und Bekanntmachung des Hinweises auf die Patenterteilung: **04.10.2001**
(21) Anmeldenummer: 97952916.1
(22) Anmeldetag: 11.12.1997
(51) Int. Cl.: B29C 67/24, B29B 13/02

(54) **VERFAHREN ZUR HERSTELLUNG VON MIT GROBKÖRNIGEM FÜLLMATERIAL HOCHGEFÜLLTEN REAKTIVKUNSTSTOFF-FORMKÖRPERN**
METHOD FOR PRODUCING REACTIVE PLASTIC MOLDED BODIES WITH HIGHLY FILLED COARSE-GRAINED FILLING MATERIAL
PROCEDE DE PRODUCTION DE CORPS MOULES EN MATIERE PLASTIQUE REACTIVE CONTENANT UNE FORTE PROPORTION DE CHARGES A GROS GRAINS

(30) Priorität: 23.12.1996 DE 19654075
(43) Veröffentlichungstag der Anmeldung: 06.10.1999
(73) Patentinhaber: BAYER AG, 51368 Leverkusen (DE)
(72) Erfinder: FRANZEN, Reinhold, D-51371 Leverkusen (DE); VAN STAVEREN, Anthony, Martinus, Jacobus, NL-3411 XA Lopik (NL); AVAR, Géza, D-51373 Leverkusen (DE)
(86) Internationale Anmeldenummer: EP9706927
(87) Internationale Veröffentlichungsnummer: WO9828125

(56) Entgegenhaltungen:
- EP-A- 0 639 443
- US-A- 4 784 814
- PATENT ABSTRACTS OF JAPAN vol. 018, no. 037 (M-1545), 20.Januar 1994 & JP 05 269799 A (NIPPON PLAST CO LTD), 19.Oktober 1993,

## Beschreibung

Die vorliegende Erfindung betrifft ein Verfahren zur Herstellung von Formkörpern aus einer Matrix eines Reaktivkunststoffes, insbesondere Polyurethan, mit darin eingeschlossenem grobkörnigen Füllmaterial, wie Kies, Steinbruchmaterial, Schlacken, zerkleinerter Bauschutt, Schaumbeton, Kunststoffabfällen oder ähnlichem.

Es wurde bereits vorgeschlagen, synthetische Gesteinsblöcke dadurch herzustellen, daß Steinstücke in einer Mischvorrichtung unter Vakuum mit einem organischen Bindemittel vermischt werden und anschließend in einer Vakuumform nach Verdichtung durch Rütteln zu Blöcken gepreßt werden (DE-A 35 22 910). Im Rahmen eines solchen Verfahrens sind Reaktivkunststoffe, insbesondere solche mit hoher Reaktionsgeschwindigkeit, als Binder nicht einsetzbar, da bereits während des Vermischens mit den Gesteinsstücken die Reaktion einsetzt.

Gemäß WO 91/18725 wurde vorgeschlagen, das Füllmaterial zunächst in die Form einzufüllen, und die Reaktivmischung in die geschlossene Form über Schläuche, die im Zuge des Füllens der in der Form verbliebenen Hohlräume aus der Form herausgezogen werden, einzubringen. Gemäß US-A 5 328 648 werden nach diesem Verfahren Verbindungselemente für betonummantelte Stahlrohre hergestellt. Dabei weisen die Stahlrohre ummantelungsfreie Enden auf, die miteinander verschweißt werden. Anschließend wird um die Verschweißungsstelle eine Manschette gelegt, in die die Zufuhrschläuche für das Bindemittel und Kies als Füllmaterial eingeführt werden. Danach wird eine Polyurethan-Reaktivmischung durch die Schläuche eingefüllt, wobei die Schläuche aus der Manschette in dem Maße entfernt werden, wie die Hohlräume zwischen dem Füllstoff mit Reaktivmischung aufgefüllt werden. Nachteilig an diesem Verfahren ist einerseits, daß die zu entfernenden Zufuhrschläuche für die Reaktivmischung Hohlräume hinterlassen, wodurch eine inhomogene Bindemittelverteilung zumindest im Bereich der ursprünglich vorhandenen Schläuche bedingt ist. Darüber hinaus weist der Formkörper ein über die Körpergeometrie verteiltes Alter des Binders auf. Der Teil des Formkörpers, der zuerst mit Binder aufgefüllt ist, ist bei schnell reagierenden Reaktivkunststoffen bereits erstarrt, wenn der letzte Teil der Form mit Binder gefüllt wird. Hierdurch entstehen inhomogene Kräfte innerhalb des Formkörpers, die zur Verbrennung bzw. sogar zum Bruch führen können. Um dem entgegenzuwirken, wird gemäß US-A 5 328 648 vorgeschlagen, den Binder durch erhebliche Mengen an Plastifiziermitteln, wie organischen Carbonaten, zu strecken.

Es wurde nun gefunden, daß die Herstellung von mit grobkörnigem Füllmaterial gefüllten Formkörpern auf Basis schnell reagierender Reaktivkunststoffe dann ohne weiteres gelingt, wenn sich das Füllmaterial während des Einfüllens des Binders in die Form auf einer die Aushärtung des Binders beschleunigenden Temperatur von 60 bis 80°C befindet.

Gegenstand der vorliegenden Erfindung ist demgemäß ein Verfahren zur Herstellung von mit grobkörnigem Füllmaterial hochgefüllten Reaktivkunststoff-Formkörpern, das dadurch gekennzeichnet ist, daß das Füllmaterial auf eine Temperatur von 60 bis 80°C aufgeheizt wird, das Füllmaterial anschließend in die Form eingefüllt und gegebenenfalls verdichtet wird und anschließend die Reaktivkunststoff-Mischung in die Form eingebracht wird. Vorzugsweise erfolgt das Einbringen der Reaktivkunststoff-Mischung vom Boden der Form her. Insbesondere bevorzugt wird die Reaktivkunststoff-Mischung unmittelbar vor dem Einbringen in die Form in einer Gegenstrom-Hochdruck-Mischkammer erzeugt. Die Temperatur der Reaktivkunststoffmischung kann zwischen 10 und 30°C, insbesondere Raumtemperatur, liegen.

Erfindungsgemäß werden im wesentlichen spannungsfreie Formkörper erhalten. Dies wird darauf zurückgeführt, daß die Reaktivkunststoff-Mischung an der Oberfläche des auf höherer Temperatur befindlichen Füllmaterials sehr schnell aushärtet, jedoch das Zwischenvolumen zwischen den Füllmaterialteilchen fließfähig bleibt und durch Nachdrängen des Bindermaterials in der Form weiter verteilt wird, wo es auf weiteren Füllmaterialoberflächen ausreagiert. Erfindungsgemäß wird demgemäß einerseits eine gleichmäßige Altersverteilung der Kunststoffreaktiv-Mischung bewirkt, indem die Oberflächen der Füllmaterialteilchen durch das zuerst eingefüllte Bindemittel belegt werden und die Zwischenräume durch das zuletzt eingefüllte Bindemittel. Zum anderen wird bewirkt, daß die Aushärtung des Formkörpers jeweils von den Oberflächen der Füllmaterialteilchen her in die Zwischenräume hinein erfolgt. Dadurch kann sich der Formkörper bis zur vollständen Aushärtung spannungsfrei der Form anpassen.

Als Reaktivkunststoff-Mischung wird vorzugsweise eine Polyurethan-Reaktivmischung eingesetzt. Grundsätzlich geeignete Bestandteile der Polyurethan-Reaktivmischung sind beispielsweise in der DE-A 1 694 138 offenbart. Vorzugsweise werden als Isocyanate solche auf Basis Diphenylmethandiisocyanat eingesetzt. Bevorzugte Polyole sind Polyetherpolyole. Die Mischung kann ferner Treibmittel in solchen Mengen enthalten, daß eine Dichte des ausgehärteten Polyurethans zwischen 200 und 1 200 kg/m³, vorzugsweise 400 bis 800 kg/m³, resultiert. Bevorzugt wird als Treibmittel Wasser in Mengen von 0,5 bis 3 Gew.-%, bezogen auf die Mischung, eingesetzt.

Vorzugsweise wird die Mischung in einem Injektionsmischkopf, dessen Auslauf unmittelbar in die Form fördert, erzeugt. Mischköpfe dieser Art sind in der Polyurethan-Technik grundsätzlich bekannt. (Siehe Becker/Braun, Kunststoff-Handbuch, Bd. 7: Polyurethane, 1993, S. 177 ff). Je nach Kompliziertheit des herzustellenden Formteils kann es erforderlich sein, mehrere Mischköpfe, die gleichzeitig in die Form fördern, vorzusehen, um eine über das Formvolumen gleichmäßige Verteilung der Reaktivmischung zu erreichen.

Vorteile der erfindungsgemäßen Formkörper gegenüber Beton oder konventionellem Polymerbeton sind die aufgrund der schnellen Aushärtung der Polyurethan-Reaktivmischung höhere Produktivität, eine bessere Chemikalienbeständigkeit und Abriebsbeständigkeit der Formkörper, eine bessere Zähigkeit und ein geringeres Gewicht.

Erfindungsgemäße Formkörper können hergestellt werden als Schallschutzwände, Abwasserkanäle. Abwasserrinnen, Schachtauskleidungen, Entwässerungssysteme, Maschinengestelle, Lagerelemente, Futtertröge oder auch Fettabscheider. Aufgrund der hervorragenden Haftung der Polyurethan-Reaktivmischung an Beton ist das erfindungsgemäße Verfahren auch für die Verbindung von Betonelementen im Hochbau oder bei Verlegung von Betonrohren hervorragend geeignet. Dabei werden die zu verbindenden Elemente mit Manschetten umgeben, die den Formhohlraum bilden.

Die Erfindung wird nachfolgend anhand der beigefügten Figuren näher erläutert.

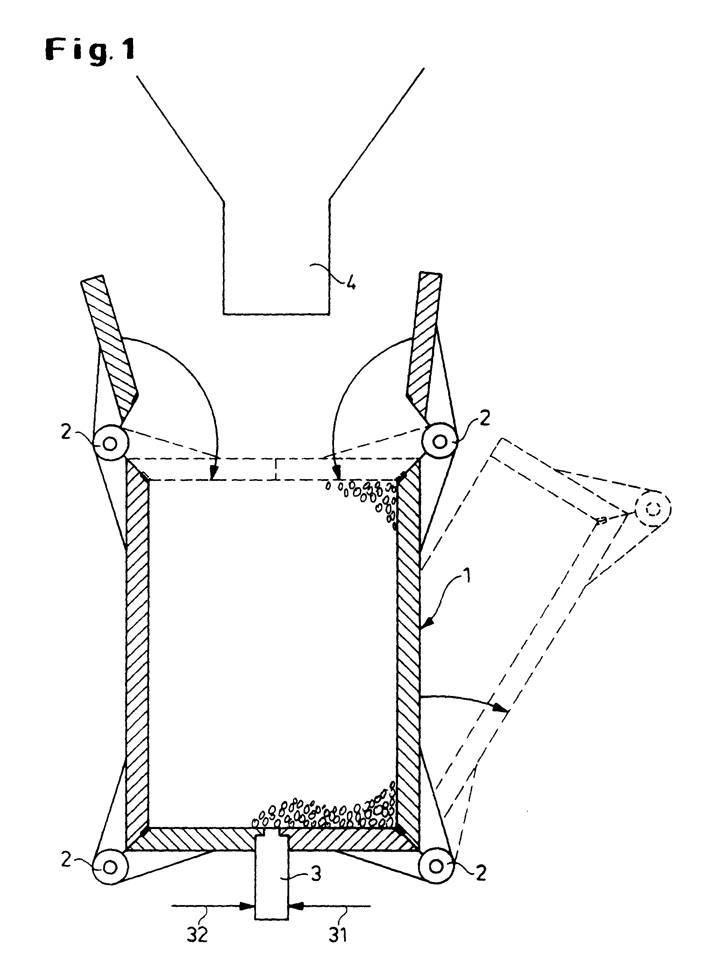

- Fig. 1: Erläutert prinzipiell die Herstellung eines erfindungsgemäßen Formkörpers. Die Form 1 besteht vorzugsweise aus Formwandelementen, die über Scharniere 2 geöffnet werden können. Vorzugsweise im Bodenraum der Form ist ein (gegebenenfalls auch mehrere) Injektionsmischkopf 3 angeordnet, dem, wie durch Pfeile 31 und 32 angedeutet, die Komponenten der Reaktivmischung zugeführt werden. Der auf die erforderliche Temperatur vorgeheizte grobkörnige Füllstoff, vorzugsweise mit Korngrößen von 5 bis 25 mm, wird über einen Trichter 4 in die Form eingefüllt. Anschließend wird die Form geschlossen und die Reaktivmischung injiziert. Innerhalb weniger Minuten, gegebenenfalls auch nach Bruchteilen von Minuten, kann das Formteil entformt werden.

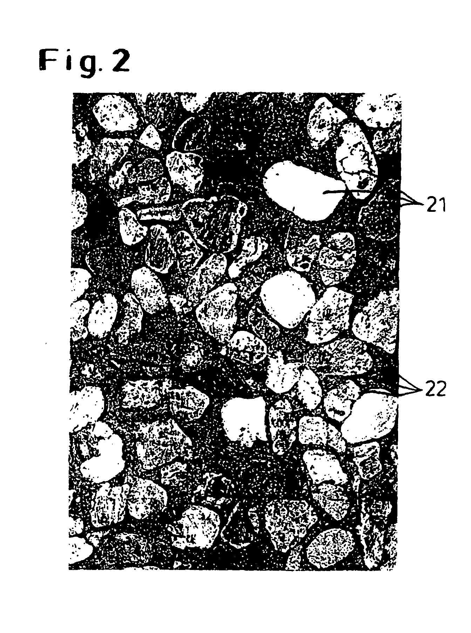

- Fig. 2: zeigt das Schliffbild eines aufgetrennten erfindungsgemäßen Formkörpers, der aus einer dichten Packung von Kieselsteinen 21 und einer Polyurethan-Schaummatrix 22 mit einer Dichte von 650 kg/m³ besteht.

## Patentansprüche

1. Verfahren zur Herstellung von mit grobkörnigem Füllmaterial hochgefüllten Reaktivkunststoff-Formkörpern, **dadurch gekennzeichnet, daß** das Füllmaterial auf eine Temperatur von 60 bis 80°C aufgeheizt wird, in eine Form eingefüllt, gegebenenfalls verdichtet wird und anschließend die Reaktivkunststoff-Mischung in die Form eingebracht wird.

2. Verfahren nach Anspruch 1, **dadurch gekennzeichnet, daß** als Reaktivkunststoff-Mischung eine Polyurethan-Mischung eingesetzt wird.

3. Verfahren nach Anspruch 1 oder 2, **dadurch gekennzeichnet, daß** die Reaktivkunststoff-Mischung unmittelbar vor dem Einbringen in die Form in einer Gegenstrom-Hochdruck-Mischkammer erzeugt wird.

4. Verfahren nach einem der Ansprüche 1 bis 3, **dadurch gekennzeichnet, daß** die Reaktivkunststoff-Mischung eine Temperatur zwischen 10 und 30°C aufweist.

5. Verfahren nach einem der Ansprüche 1 bis 4, **dadurch gekennzeichnet, daß** die Reaktivkunststoff-Mischung ein Schäummittel in solcher Menge enthält, **daß** die Dichte des ausgehärteten Reaktivkunststoffs zwischen 200 und 1 200 kg/m³ liegt.

6. Verfahren nach einem der Ansprüche 1 bis 5, **dadurch gekennzeichnet, daß** das grobkörnige Füllmaterial eine Korngröße von 5 bis 25 mm aufweist.

7. Verfahren nach einem der Ansprüche 1 bis 6, **dadurch gekennzeichnet, daß** als grobkörniges Füllmaterial Kies, zerkleinertes Steinbruchmaterial, Schlacken, Bauschutt, Schaumbeton oder Kunststoffabfälle eingesetzt werden.

8. Verfahren nach einem der Ansprüche 1 bis 7, **dadurch gekennzeichnet, daß** in die Form zusätzlich Armierungselemente aus Stahl, Glasfasersträngen oder Glasfasergewebe eingebracht werden.

## Claims

1. Method for producing reactive plastics moulded bodies with a high proportion of coarse-grained filler, **characterised in that** the filler is heated to a temperature of 60 to 80°C, fed into a mould, optionally compacted, and the reactive plastics mixture is then introduced into the mould.

2. Method according to claim 1, **characterised in that** the reactive plastics mixture which is used is a polyurethane mixture.

3. Method according to claim 1 or 2, **characterised in that** the reactive plastics mixture is produced in a countercurrent high-pressure mixing chamber just before being introduced into the mould.

4. Method according to one of claims 1 to 3, **characterised in that** the reactive plastics mixture is heated to a temperature of between 10 and 30°C.

5. Method according to one of claims 1 to 4, **characterised in that** the reactive plastics mixture comprises a foaming agent in a quantity such that the density of the set reactive plastics material is between 200 and 1,200 kg/m³.

6. Method according to one of claims 1 to 5, **characterised in that** the coarse-grained filler has a grain size of 5 to 25 mm.

7. Method according to one of claims 1 to 6,
**characterised in that** gravel, comminuted quarry material, slag, rubble, foam concrete or plastics waste are used as the coarse-grained filler.

8. Method according to one of claims 1 to 7, **characterised in that** reinforcement elements consisting of steel, glass fibre strands or glass fibre cloth are additionally introduced into the mould.

## Revendications

1. Procédé pour la production de corps moulés en matière plastique réactive fortement remplis de charge à gros grains, **caractérisé en ce que** la charge est chauffée à une température de 60° à 80°, est introduite dans le moule et le cas échéant comprimée et ensuite le mélange de matière plastique réactive est amené dans le moule.

2. Procédé selon la revendication 1, **caractérisé en ce qu'**on utilise comme mélange de matière plastique réactive un mélange au polyuréthane.

3. Procédé selon la revendication 1 ou la revendication 2, **caractérisé en ce que** le mélange de matière plastique réactive est produit directement avant l'introduction dans le moule, dans une chambre de mélange à haute pression et à contre-courant.

4. Procédé selon l'une quelconque des revendications 1 à 3, **caractérisé en ce que** le mélange de matière plastique réactive présente une température entre 10 et 30°C.

5. Procédé selon l'une quelconque des revendications 1 à 4, **caractérisé en ce que** le mélange de matière plastique réactive contient un agent moussant en quantité telle que la densité de la matière plastique durcie est située entre 200 et 1200 kg/m.³

6. Procédé selon l'une quelconque des revendications 1 à 5, **caractérisé en ce que** la charge à gros grains présente une grosseur de grains de 5 à 25 mm.

7. Procédé selon l'une quelconque des revendications 1 à 6, **caractérisé en ce qu'**on utilise comme charge à gros grains du gravier, des matériaux de carrière concassés, des scories, des gravois, du béton mousse ou des déchets de matière plastique.

8. Procédé selon l'une quelconque des revendications 1 à 7, **caractérisé en ce que** des éléments d'armature en acier, des écheveaux en fibres de verre ou des tissus en fibres de verre sont introduits additionnellement dans le moule.
